# EUROPEAN PATENT APPLICATION

(11) **EP 1 632 366 A1**
(43) Date of publication of application: **08.03.2006**
(21) Application number: 04730107.2
(22) Date of filing: 28.04.2004
(51) Int. Cl.: B60C 17/06

(54) **TIRE WHEEL ASSEMBLY FOR RUN-FLAT TIRE**

(30) Priority: 06.06.2003 JP 2003162616
(71) Applicant: THE YOKOHAMA RUBBER CO., LTD., Tokyo 105-8685 (JP)
(72) Inventor: KANENARI, Daisuke, THE YOKOHAMA RUBBER CO., LTD, Kanagawa 2548601 (JP); KOGURE, Tomohiko, THE YOKOHAMA RUBBER CO., LTD, Kanagawa 2548601 (JP); NATORI, Junichiro, THE YOKOHAMA RUBBER CO., LTD, Kanagawa 2548601 (JP)
(74) Representative: HOFFMANN EITLE
(86) International application number: PCT/JP2004/006201
(87) International publication number: WO 2004/108438

(57) **Abstract**

A tire wheel assembly having, attached to a tire/rim cavity, a run flat core member formed such that a high rigidity ring-shaped shell is supported at a rim with elastic rings, which are composed of a thermoplastic elastomer composition comprising a rubber composition (B) dispersed in a thermoplastic resin (A) or a hydrogen bondable thermoplastic elastomer comprising an elastomer polymer having a carbonitrile group-containing group and a heterocyclic amine-containing group at the side chain thereof and/or a composition of the thermoplastic elastomer, giving a tire wheel assembly of a run flat tire, in particular a tire wheel assembly capable of recycling the elastic rings for forming the core member.

## Description

### TECHNICAL FIELD

The present invention relates to a tire wheel assembly usable for a pneumatic tire enabling limited operation in a damaged or flat state (hereinafter referred to as a "run flat tire"), more specifically it relates to a tire wheel assembly capable of recycling a run flat core member comprising a high rigidity ring-shaped metal shell and elastic rings provided in a tire/rim cavity.

### BACKGROUND ART

There is a need for a run flat tire having an emergency running ability enabling it to be run on for a certain distance even when the pneumatic tire rapidly drops in internal pressure due to a flat, blowout, etc. during driving of an automobile. Numerous proposals have been made to satisfy these needs. As such proposals, for example, Japanese Unexamined Patent Publication (Kokai) No. 10-297226 and Japanese Unexamined Patent Publication (Kokai) No. 2001-519279 propose technology enabling running flat by attaching a run flat support (hereinafter referred to as a "core member") on the rim of the cavity of the pneumatic tire and using this to support a flat or otherwise accidental damaged pneumatic tire. In addition, Japanese Unexamined Patent Publication (Kokai) No. 2001-163020 and Japanese Unexamined Patent Publication (Kokai) No. 1998-297226 also disclose run flat tires.

The above run flat core member has a ring-shaped member using the outer circumference thereof as a support surface, attaches elastic rings at the two legs, and has the core member supported on the rim of the tire via the elastic rings. Note that the technology using a run flat core member does not make any particular design modifications to the wheel/rim of conventional general pneumatic tires and enables the wheel/rim to be used as they are, and therefore, there is the advantage that the production, processing and attachment facilities for conventional pneumatic tires can be used as they are.

However, even in the tire industry, in recent years, recycling of tires is becoming important from the viewpoints of save of resources, protection of the environment, etc. The recycling capability of run flat tires from such viewpoints, whereupon it was found that it is necessary to enable the run flat core members, in particular the components of the elastic rings, to be made recyclable.

### SUMMARY OF THE INVENTION

Accordingly, the object of the present invention is to provide a tire wheel assembly securing the durability of the elastic rings forming a run flat core member of a run flat tire wheel assembly at the time of run flat operation, while improving the run flat core member so as to enable the used elastic rings to be recycled.

In accordance with the present invention, there is provided a tire wheel assembly having, attached to a tire/rim cavity, a run flat core member formed such that a high rigidity ring-shaped shell is supported at a rim with elastic rings, which are composed of a thermoplastic elastomer composition comprising a rubber composition (B) dispersed in a thermoplastic resin (A).

In accordance with the present invention, there is also provided a tire wheel assembly having, attached to a tire/rim cavity, a run flat core member formed such that a high rigidity ring-shaped shell is supported at a rim with elastic rings, which are composed of a thermoplastic elastomer capable of bonding with hydrogen comprising an elastomer polymer having a carbonitrile group-containing group and a heterocyclic amine-containing group at the side chain thereof and/or a composition of the thermoplastic elastomer.

### BRIEF DESCRIPTION OF THE DRAWINGS

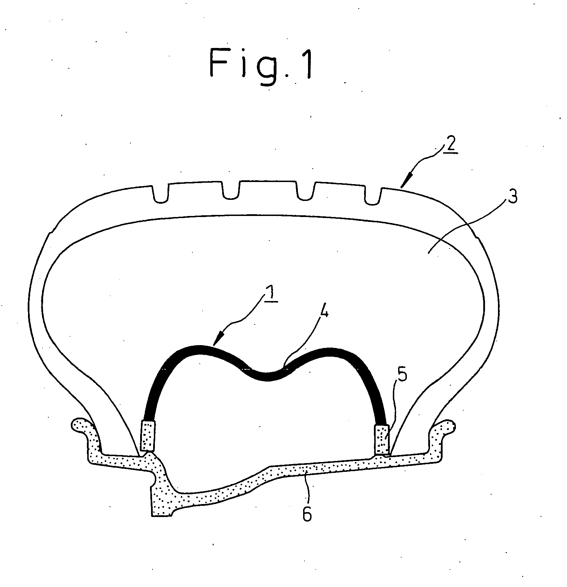

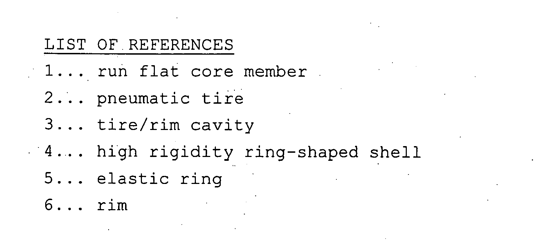

The present invention will now be explained, while referring to the drawings. FIG. 1 is a sectional view along the radial direction of principal parts of an example of a tire wheel assembly of the present invention.

### BEST MODE FOR CARRYING OUT THE INVENTION

The inventors engaged in research for the purpose of enabling securing durability at the time of run flat operation and enabling recycling of the used elastic rings in a run flat core member formed from a high rigidity ring-shaped shell and elastic rings and, as a result, found that the above object can be achieved by making the material of the elastic rings a thermoplastic elastomer composition comprising a thermoplastic resin in which a rubber composition is dispersed or hydrogen bondable thermoplastic elastomer. Further, we found that by modifying the contact area between the ring-shaped shell and the elastic rings or the shape of the legs of the shell so as to secure bondability between the elastic rings of this material and the rigid ring-shaped shell, it is possible to enable recycling and obtain a more preferable durability.

The present invention will now be explained in further detail with reference to an example of a tire wheel assembly of the present invention shown in FIG. 1. FIG. 1 is a sectional view along the radial direction of principal parts of a representative example of a tire wheel assembly (i.e., wheel) of the present invention.

The run flat core member 1 according to the present invention, as shown in, for example, FIG. 1, is formed from a high rigidity ring-shaped shell 4 and elastic rings 5 inserted into a tire/rim cavity 3 of a pneumatic tire 2. This run flat core member 1 is shaped with an outside diameter smaller than the inside diameter of the cavity 3 so as to maintain a predetermined distance from the inside circumference of the cavity 3 of the pneumatic tire 2, while the inside diameter is generally formed to a dimension substantially the same as the inside diameter of the bead of the pneumatic tire. This run flat core member 1 is inserted into the pneumatic tire 2 and, in that state, is assembled at the rim 6 of the wheel, together with the pneumatic tire 2, so as to form a tire wheel assembly. When attaching this tire wheel assembly to an automobile etc. and the pneumatic tire is punctured, while being run on, it becomes possible to run on it in the state with the flat tire 2 supported by the outer circumference of the run flat core member 1.

As explained above, the run flat core member of the tire wheel assembly of the present invention is composed of a ring-shaped shell 4 made of a high rigidity material (for example, metallic materials such as iron, stainless steel, steel, aluminum alloy, or fiber-reinforced synthetic resins, etc.) and elastic rings 5. The ring-shaped shell 4 forms, at the outside thereof, a continuous support surface for supporting a flat tire or otherwise accidental damaged tire and forms at the inside left and right side walls thereof serving as legs. The outside support surface can take various shapes. For example, as shown in FIG. 1, it may be shaped so that the horizontal sectional shape perpendicular to the circumferential direction curves outward (the number of outward curves in the tire axial direction not limited to the two shown in FIG. 1 and possibly being three or more or even just one) and further may be flat or otherwise shaped.

The elastic rings 5 are, for example, attached to the ends of the two legs of the ring-shaped shell 4 and support the ring-shaped shell 4 by abutting against the left and right rims 6 as they are. The elastic rings 5 are composed of conventional rubber. They buffer shock or vibration received by the ring-shaped shell 4 from a flat tire or otherwise accidental damaged tire and act to prevent slip of the tire 6 to thereby stably support the ring-shaped shell 4 on the rim 6.

To increase the bonding strength between the high rigidity ring-shaped shell 4 and the elastic rings 5 forming the run flat core member 1, it is preferable to secure a predetermined contact area. When the load at the time of rim work or run flat operation is made dimensionless by the nominal radius R (inches) of the tire. When the bonding area is S (cm²), the ratio S/R should be at least 4.5 cm²/inch, preferably 8 to 20 cm²/inch, where the "bonding area" means the bonding area between the rigid material and elastic rings at one side of the ring-shaped shell, that is, the total bonding area in the entire circumferential direction of the front/rear sides and end face of the metal shell where the end of the ring-shaped shell 4 contacts the elastic rings 5 in the horizontal cross-section perpendicular to the circumferential direction.

Further, the contact area between the ring-shaped shell 4 and the elastic rings 5 may be formed by the axial direction and the radial direction, more preferably the two are substantially equal. By doing this, a structure is formed which can withstand force in both of the axial direction and radial direction generated at the time of run flat operation. In FIG. 1, the run flat core member 1, pneumatic tire 2, and rim 6 are formed coaxially in ring shapes about a shaft (not shown) of the wheel. Note that the dimensions of the ring-shaped shell are not particularly limited, but the thickness is preferably 0.5 to 3.0 mm and the weight is preferably substantially equal to the interval between the left and right tire bead toes.

To maintain the weight supporting ability during run flat operation, the elastic rings should have a 100% modulus (100°C) of at least 1 MPa, preferably 1 MPa to 10 MPa, more preferably 2 to 5 MPa. The material having recycling ability and satisfying the above physical property may be (1) a composite material of a matrix of a resin in which fine rubber particles are dispersed, which composite material softens at the melting point of the matrix resin, and therefore can be melted for reuse and further, due to the presence of the rubber, has a suitable elasticity even at a high temperature. Further, (2) a hydrogen bonding thermoplastic elastomer, that is, a heat reversible cross-linked rubber, is also preferable in that it can be melted at a temperature of at least the melting point for reuse and has a suitable elasticity even under a high temperature of run flat running. In addition, it is possible to use a material provided with this physical property under a high temperature, having a melting point of at least 120°C, preferably 150°C, more preferably 180°C or more and 100°C or less, and having a rubbery elasticity.

The thermoplastic elastomer composition usable for forming the elastic rings according to the present invention contains a matrix resin preferably composed of a thermoplastic resin (A) having a melting point of at least 150°C, preferably at least one thermoplastic resin (A) selected from the group consisting of polyamide resins, polyester resins, polynitrile resins, polyolefin resins, polyvinyl resins, polyphenylene oxide resins, and polyimide resins, in which a rubber composition (B) is dispersed in a (A)/(B) ratio (weight ratio) of 80/20 to 25/75, more preferably 70/30 to 35/65. If the ratio of the thermoplastic resin (A) is too large, the rigidity of the elastic rings becomes high and rim assembly tends to become difficult, and therefore, this is not so preferred. Conversely, if too small, the rubber becomes hard to disperse and the mixing is liable to become impossible, and therefore this is not preferred.

As the rubber of the rubber composition (B), for example, natural rubber, epoxidized natural rubber, diene-based rubbers (for example, polyisoprene rubber (IR), polybutadiene rubber (BR), conjugated diene-aromatic vinyl copolymers (for example, SBR), ethylenic unsaturated nitrile-conjugated diene copolymers (for example, NBR)) and the hydrogenated products thereof, olefin-based rubbers (ethylene-propylene rubbers (EPDM or EPM), maleic acid-modified ethylene-propylene rubbers (M-EPM), butyl rubbers (IIR), isobutylene and aromatic vinyl or diene-based monomer copolymers), acryl rubbers (ACM), ionomers, halogen-containing rubbers (for example, CIIR, BIIR, brominated isobutylene-p-methylstyrene copolymers (Br-IPMS), chloroprene rubber (CR), hydrin rubbers (CHR, CHC), chlorosulfonated polyethylenes (CSM), chlorinated polyethylenes (CM), maleic acid-modified chlorinated polyethylenes (M-CM)), sulfur-containing rubbers (for example, polysulfide rubber), fluoro rubbers (for example, vinylidene fluoride-based rubbers, fluorine-containing vinyl ether-based rubbers, tetrafluoroethylene-propylene-based rubbers, fluorine-containing phosphagen-based rubbers), etc. may be mentioned. The above rubbers may be used above or in any mixtures thereof. These rubbers may be suitably mixed with fillers such as carbon blacks, silicas, calcium carbonate, clays, or conventional additives such as antioxidants agents, oils or plasticizers, vulcanization agents, vulcanization accelerators, vulcanization aids.

As the method of dispersing the rubber composition (B) in the thermoplastic resin (A) according to the present invention, for example, it is possible to melt mix, in advance, the thermoplastic resin (A) and rubber composition (B) (unvulcanized) by a twin-screw mixing extruder so as to disperse the rubber composition (B) in the thermoplastic resin (A) forming the continuous phase. When vulcanizing the rubber composition (B), it is also possible to add the vulcanization agent and dynamically vulcanize the rubber, while mixing the thermoplastic resin (A) and rubber composition (B). Further, the various compounding agents for the thermoplastic resin or the rubber composition (other than vulcanization agents) may be added during mixing, but preferably are premixed before the mixing. The mixer used for mixing the thermoplastic resin (A) and the rubber composition (B) is not particularly limited, but a screw extruder, kneader, Bambury mixer, twin-screw extruder, etc. may be mentioned. Among these, for mixing of the resin component and rubber composition and dynamic vulcanization of the rubber composition, a twin-screw extruder is preferably used. Further, it is also possible to use two or more types of kneaders for successively mixing. As the conditions for the melt mixing, the temperature should be at least a temperature where the thermoplastic resin melts. Further, the shear rate at the time of mixing is preferably 2500 to 7500 sec⁻¹. The time of the mixing as a whole is 30 sec to 10 min. Further, when vulcanization agent is added, the vulcanization time after addition is preferably 15 sec to 5 min.

On the other hand, the hydrogen bonding thermoplastic elastomer (i.e., the thermoplastic elastomer capable of bonding with hydrogen), which forms the elastic rings according to the present invention and the composition containing the same form a heat reversible cross-linked rubber, which softens at a predetermined temperature, but recovers the rubbery elasticity at room temperature. Specifically, as explained above, it is a thermoplastic elastomer composition composed of a hydrogen bonding thermoplastic elastomer composed of an elastomeric polymer having a carbonyl group-containing group and a hetereocyclic amine-containing group at the side chain thereof and/or the same to which a suitable compounding agent (for example, fillers such as carbon black, silica, calcium carbonate, clay, antioxidants agent, oil or plasticizer, vulcanization agent, vulcanization promoter, vulcanization aid, or other general use additive) is suitably added, more particularly those described in, for example, Japanese Unexamined Patent Publication (Kokai) No. 2000-169527. As the carbonyl group-containing group, at least one of an amide, ester, imide, and carboxy may be mentioned. As specific examples of groups having this and said heterocyclic amine-containing group, the groups having the following formulae (1) to (5) may be mentioned: 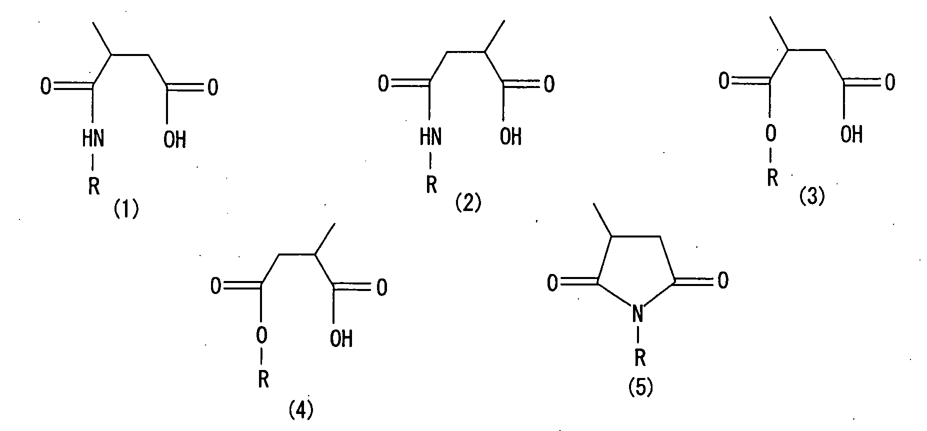
where R is a heterocyclic amine.

As the elastomeric polymer usable in the present invention, specifically, for example, diene-based rubbers such as natural rubbers, isoprene rubbers, butadiene rubbers, 1,2-butadiene rubbers, styrene-butadiene rubbers, nitrile rubbers, chloroprene rubbers; olefin-based rubbers such as butyl rubbers, ethylene-propylene-based rubbers (EPDM, EPM), chlorosulfonated polystyrenes, acryl rubbers, fluoro rubbers; epichlorohydrin rubbers, polysulfide rubbers, silicone rubbers, urethane rubbers, etc. may be mentioned. Further, it may be a thermoplastic elastomers containing a resin component (TPE), for example, may be a hydrated one. Further, it may be a polystyrene-based TPE (SBS, SIS, SEBS), polyolefin-based TPE, polyvinyl chloride-based TPE, polyurethane-based TPE, polyester-based TPE, polyamide-based TPE, etc.

The elastomeric polymers may be either in a liquid form or in a solid form. Further, the molecular weight thereof is not particularly limited and may be suitably selected according to the object of use, cross-linking density, etc.

The carbonyl group-containing group bonded to the side chain of the elastomeric polymer of the present invention is hydrogen bonding. Specifically, a carbonyl group, carboxyl group (OH), amide group, ester group, imide group, etc. may be mentioned. As a compound to which such a group may be introduced, a carboxylic acid and its derivatives may be mentioned, without their being particularly limited to. As the carboxylic acid compound, an organic acid_having a saturated or unsaturated hydrocarbon group may be mentioned. The hydrocarbon group may be any of an aliphatic, alicyclic or aromatic carboxylic acid, etc. Further, as the carboxylic acid derivative, a carboxylic acid anhydride, ester, ketone, amino acid, amide, imide or thiocarboxylic acid (mercapto group-containing carboxylic acid) may be mentioned. Specifically, carboxylic acids and substituent-containing carboxylic acids such as malonic acid, maleic acid, succinic acid, glutaric acid, phthalic acid, isophthalic acid, terephthalic acid, p-phenylenediacetic acid, p-hydroxybenzoic acid, p-aminobenzoic acid, mercaptoacetic acid; acid anhydrides such as succinic anhydride, maleic anhydride, glutaric anhydride, phthalic anhydride, propionic anhydride, benzoic anhydride; aliphatic esters such as maleic acid ester, malonic acid ester, succinic acid ester, glutaric acid ester, ethyl acetate, aromatic esters such as phthalic acid ester, isophthalic acid ester, terephthalic acid ester, ethyl-m-aminobenzoate, methyl-p-hydroxybenzoate; ketones such as quinone, anthraquinone, naphthoquinone, amino acids such as glycine, tricine, bicin, alanine, valine, leucine, serine, threonine, lysine, asparagic acid, glutamic acid, cysteine, methionine, proline, N-(p-aminobenzoyl)-β-alanine; amides such as maleinamide, maleinamidic acid (maleic acid monoamide), monoamide succinate, 5-hydroxyvaleramide, N-acetylethanolamine, N,N'-hexamethylene bisacetoamide, malonamide, cycloserine, 4-acetoamidophenol, p-acetoamidebenzoic acid; imides such as maleinimide, succinimide may be mentioned.

Further, the heterocyclic amine-containing group is introduced from a nitrogen-containing hetero ring or a compound containing the hetero ring. The nitrogen-containing hetero ring may be a structure including or generating a hydrogen-bonding amino group in the hetero ring. As the nitrogen-containing hetero ring, for example, a pyrrole, histidine, imidazole, triazolidine, triazole, triazine, pyridine, pyrimidine, pyrazine, indole, quinoline, purine, phenazine, pteridine, melamine, etc. may be mentioned. The nitrogen-containing hetero ring may also include another hetero atom in the ring. Further, the compound containing the nitrogen-containing hetero ring should have such a heterocyclic skeleton. It is not particularly limited, but for example it may have a ring capable of chemically (covalently) bonding with the main chain carbon of the elastomeric polymer. As the compound containing such a heterocyclic ring, specifically dipyridyl, ethylene dipyridyl, trimethylene dipyridyl, dipyridyl amine, 1,2-dimethyl imidazole, 2-benzimidazole urea, pyrrole-2-carboxylic acid, 3-methyl-pyrazole, pyridine, 4-methylpyridine, 4(or 2)-hydroxymethylpyridine, 2(or 4)-(β-hydroxyethyl)-pyridine, 2(or 4)-(2-aminoethyl)-pyridine, 2(or 4)-aminopyridine, 2,6-diaminopyridine, 2-amino-6-hydroxypyridine, 6-azathymine, acetoguanamine, benzoguanamine, citrazinic acid, 1,2,4-triazole, 3-amino-1,2,4-triazole, 3-aminomethyl-1,2,4-triazole, 3-methylamino-1,2,4-triazole, 3-methylol-1,2,4-triazole, 3-hydroxy-1,2,4-triazole, 2-hydroxytriazine, 2-aminotriazine, 2-hydroxy-5-methyltriazine, 2-amino-5-methyltriazine, 2.-hydroxypyrimidine, 2-aminopyrimidine, 2-aminopyrazine, 2-hydroxypyrazine, 6-aminopurine, 6-hydroxypurine, etc. may be mentioned.

The thermoplastic elastomer usable in the present invention is composed of an elastomeric polymer having at the side chain thereof and in one molecule the above carbonyl group-containing group and the heterocyclic amine-containing group. The carbonyl group-containing group and the heterocyclic amine-containing group are pendant bonded to the side chain of the elastomeric polymer to form a chemically stable bond as explained above. At this time, the carbonyl group-containing group and the heterocyclic amine-containing group may be bonded to the polymer main chain as mutually independent side chains or may be bonded with the main chain through mutually different groups so that the carbonyl group-containing group and the heterocyclic amine-containing group form a single side chain. When the carbonyl group-containing group and the heterocyclic amine-containing group form a single side chain in this way, in addition to the bond with the main chain, the carbonyl group-containing group and the heterocyclic amine-containing group are also chemically bonded. The carbonyl group-containing group and the heterocyclic amine-containing group may also be bonded through some sort of bond.

The material forming the elastic rings 5 of the present invention may further have an ordinary cross-linking agent, various oils, an anti-ageing agent, filler, plasticizer, or other various additives generally compounded in for rubber use compounded into it. The amounts of these additives compounded may be made the general amounts compounded so long as the object of the present invention is not contravened.

### EXAMPLES

Examples will now be used to further explain the present invention, but the scope of the present invention is not limited to these Examples needless to say.

### Examples 1 to 9, Conventional Example 1 and

### Comparative Example 1

Tire wheel assemblies were prepared using tires of Conventional Example 1, Comparative Example 1, and Examples 1 to 9 obtained by the formulations (parts by weight) shown in Tables I to III according to a conventional method using as tire sizes 205/55R16 89V and rim sizes 16 x 6 1/2 JJ.

These test tire wheel assemblies were evaluated and tested for durability by the measurement method shown below. The results are shown in Tables I to III.

### Durability Test

The test tires were attached to a 2500 cc passenger car. The front right side tire was filled to an internal air pressure of 0 kPa and the other three tires to an internal air pressure of 200 kPa. The car was run at 90 km/hr until breaking down. The results are indexed to the value of Conventional Example 1 as 100. The larger the value, the better the durability indicated.

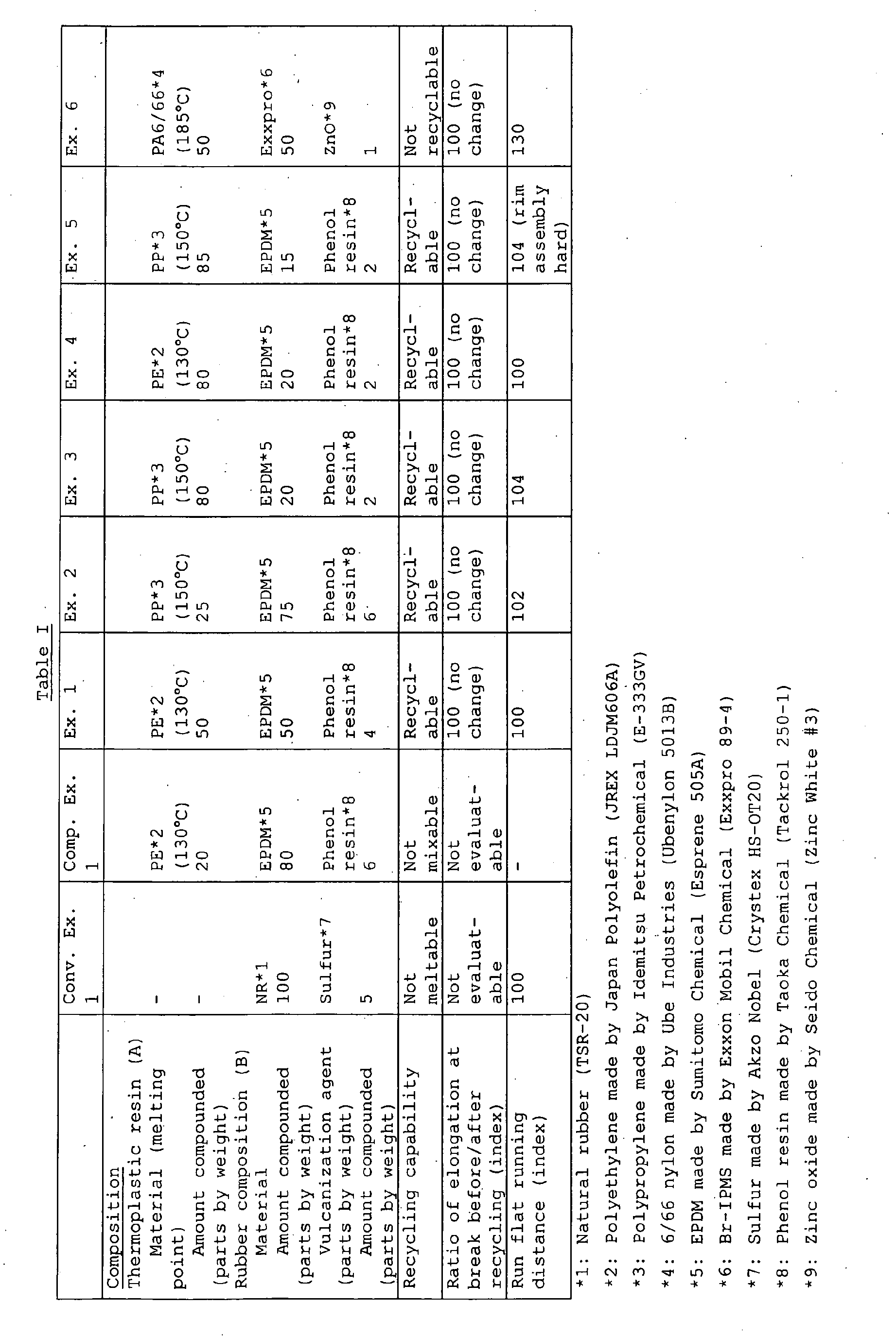

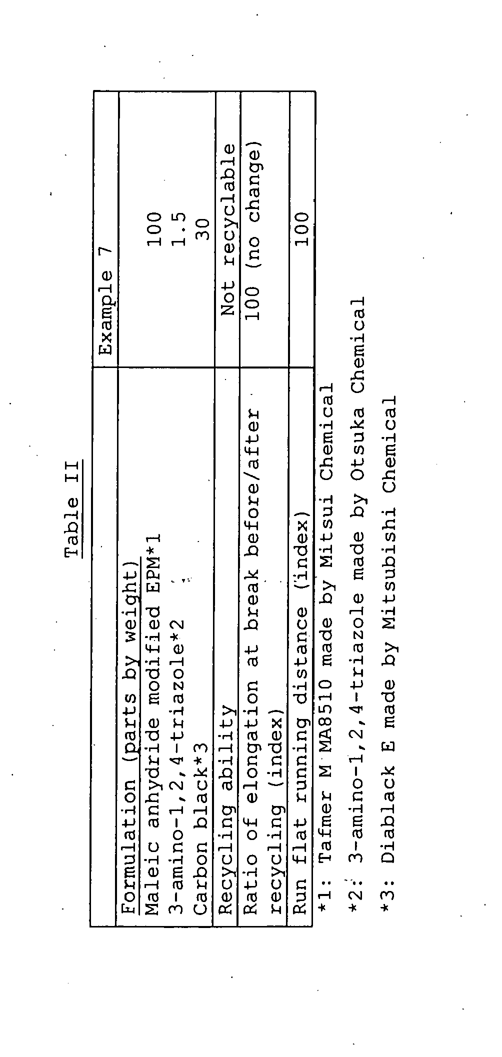

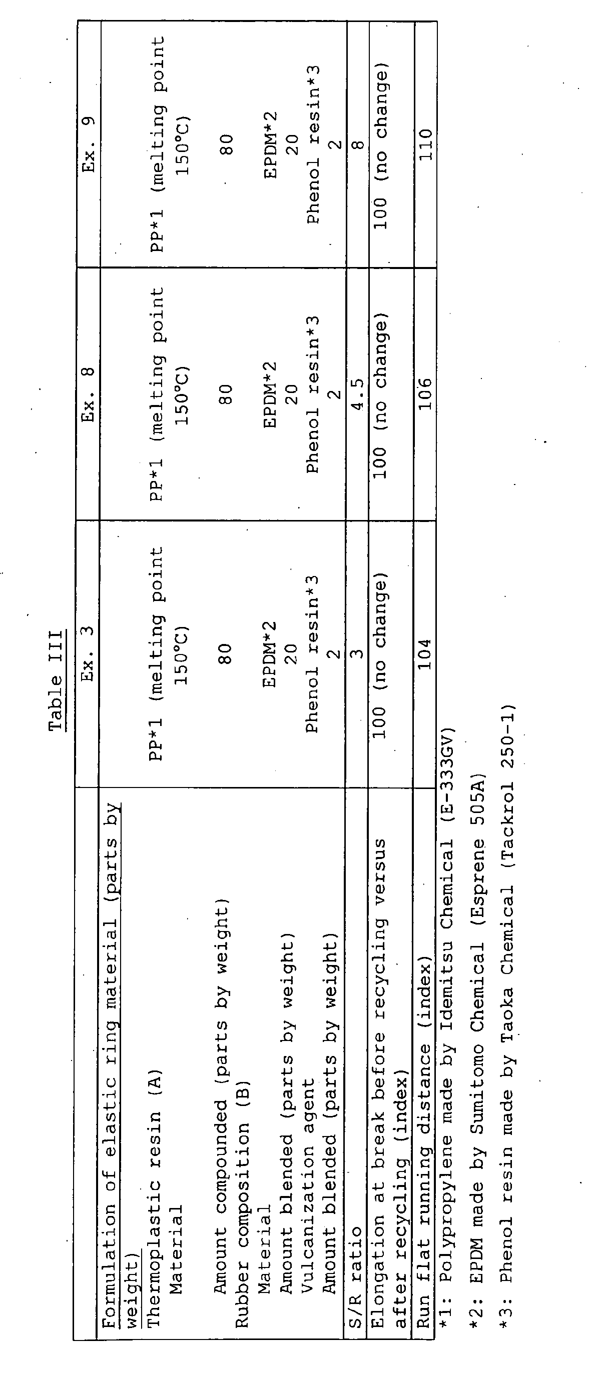

### INDUSTRIAL APPLICABILITY

As explained above, according to the present invention, by forming the elastic rings forming the core member of a run flat tire by a thermoplastic elastomer composition comprising a thermoplastic resin (A) in which a rubber composition (B) is dispersed, preferably dispersed, while dynamically vulcanized or forming them by a hydrogen bonding thermoplastic elastomer having a carbonitrile group-containing group and heterocyclic amine-containing group at its side chain or a composition of the same, it is possible to obtain recyclable elastic rings having a weight supporting strength under a high temperature during running flat.

## Claims

1. A tire wheel assembly having, attached to a tire/rim cavity, a run flat core member formed such that a high rigidity ring-shaped shell is supported at a rim with elastic rings, which are composed of a thermoplastic elastomer composition comprising a rubber composition (B) dispersed in a thermoplastic resin (A).

2. A tire wheel assembly as claimed in claim 1, wherein a melting point of the thermoplastic resin (A) forming the elastic ring is at least 150°C and the weight ratio (A)/(B) of the thermoplastic resin (A) and the rubber composition (B) is 80/20 to 25/75.

3. A tire wheel assembly as claimed in claim 1 or 2, wherein said rubber composition (B) is dynamically vulcanized during the mixing of the thermoplastic elastomer composition.

4. A tire wheel assembly as claimed in any one of claims 1 to 3, wherein said thermoplastic resin (A) is at least one thermoplastic resin selected from the group consisting of polyamide resins, polyester resins, polynitrile resins, polyolefin resins, polyvinyl resins, polyphenylene oxide resins, and polyimide resins.

5. A tire wheel assembly having, attached to a tire/rim cavity, a run flat core member formed such that a high rigidity ring-shaped shell is supported at a rim with elastic rings, which are composed of a thermoplastic elastomer capable of bonding with hydrogen and comprising an elastomer polymer having a carbonitrile group-containing group and a heterocyclic amine-containing group at the side chain thereof and/or a composition of the thermoplastic elastomer.

6. A tire wheel assembly as claimed in any one of claims 1 to 5, wherein the ratio S/R of a nominal size R (inch) of the tire and a bonding area S (cm²) of the rubber/metal is at least 4.5 cm²/inch.

7. A tire wheel assembly as claimed in claim 6, wherein the bonding areas are composed of substantially axial direction surfaces and substantially radial direction surfaces.
